# EUROPEAN PATENT SPECIFICATION

(11) **EP 2 398 737 B1**
(45) Date of publication and mention of the grant of the patent: **31.01.2018**
(21) Application number: 10704224.4
(22) Date of filing: 17.02.2010
(51) Int. Cl.: C01C 1/24, C01C 1/26, C01C 1/28, C05C 1/00, C05C 3/00

(54) **PROCESS FOR THE PRODUCTION OF AMMONIUM SALTS**
VERFAHREN ZUR PRODUKTION VON AMMONIUMSALZEN
Procédé pour la production de sels d'ammonium

(30) Priority: 18.02.2009 EP 09153144
(43) Date of publication of application: 28.12.2011
(73) Proprietor: Convex B.V., 8601 WB Sneek (NL)
(72) Inventor: ZANSTRA, Geert, Jan, NL-8644 VS Dearsum (NL)
(74) Representative: V.O.
(86) International application number: PCT/NL2010/050076
(87) International publication number: WO 2010/095936

(56) References cited:
- WO-A-01/12548
- WO-A-2008/130254
- US-A1- 2007 048 212
- US-B1- 6 365 005

## Description

The invention is directed to a process for the production of ammonium, in particular in the form of a concentrated ammonium salt solution, from an aqueous liquid comprising ammonia (NH₃).

It is known in the art that ammonia, when combined directly with acids in an aqueous environment, forms salts. For example, ammonium chloride is formed when ammonia is combined directly with hydrochloric acid, ammonium nitrate is formed when ammonia is combined directly with nitric acid, *etc.*

This property can be used for treating aqueous liquid streams comprising ammonia and an acid. Such aqueous liquid streams are, for example, obtained as a waste product from chemical processing plants. US-A-2007/0048212 discloses a process in which ammonium sulfide is produced from an aqueous liquid including ammonia and hydrogen sulfide. This process comprises steam stripping the liquid to produce a vapor stream including water, the ammonia and the hydrogen sulfide. The vapor stream is then cooled and the ammonia and the hydrogen sulfide in the vapor stream react to obtain ammonium sulfide ((NH₄)₂S).

WO-A-01/12548 describes a method for evaporating aqueous solutions containing ammonia using mechanical vapor recompression. In this process acid is added to the gas phase. US-A-2007/0048212 describes a process for preparing a concentrated ammonium solution. Mechanical vapor recompression or other types of compression are not disclosed or suggested.

It is an object of the present invention to provide a process for the production of an ammonium salt from a feed stream comprising ammonia and water, with low energy consumption.
In a first aspect of the invention, this object is met by using mechanical vapor recompression (MVR) to obtain a compressed vapor stream comprising ammonia and water, and condensing said vapor stream into a concentrated ammonium solution. The feed stream comprising ammonia and water is heated and led into an evaporator. It was found that only a small amount of the feed stream has to be evaporated to remove 60-80% of the ammonia present in the feed stream and obtain a vapor stream comprising ammonia and water. The vapor stream is then fed into a compressor producing a compressed vapor stream. Subsequently, the compressed vapor stream is fed through at least one heat exchanger, which heat exchanger is in contact with the feed stream, thereby transferring heat from the compressed vapor to the feed stream before it enters the evaporator and condensing the compressed vapor stream into a concentrated ammonium solution, which solution can then be contacted with an acid to obtain an ammonium salt solution. Thus, in a first aspect, the present invention is directed to a process for the production of an aqueous ammonium salt solution, comprising:
- feeding a heated feed stream comprising water and ammonia (NH₃) into an evaporator, producing a vapor stream comprising at least part of said NH₃ and at least part of said water, and
- compressing said vapor stream by a compressor into a compressed vapor stream comprising at least part of said NH₃ and at least part of said water, and
- bringing said compressed vapor stream and said feed stream in heat-exchanging contact in a heat exchanger, thereby transferring heat from the compressed vapor to the feed stream and condensing at least part of the compressed vapor stream into an ammonium solution, and
- contacting at least part of said ammonium solution with an acid, thus obtaining an ammonium salt solution.

Mechanical vapor recompression (MVR) is a very energy efficient evaporation system. MVR is a technique in which the major heating source is the vapor. A vapor is formed by feeding a liquid feed stream to an evaporator, which vapor is then compressed, resulting in an increased temperature. Subsequently, the heat of the vapor is transferred in a heat exchanger to the liquid feed stream. Therefore, the heat in the system is constantly reused. Non vaporized liquid feed stream can be circulated at a relatively high rate. With power being the only utility, the major operating costs of an MVR system are the mechanical energy required to operate the circulation pump and the compressor. Therefore, using MVR for the production of ammonium from a feed stream of liquid comprising ammonia and an acid is energetically more favorable than currently used techniques such as, for example, steam stripping.

The feed stream may comprise both liquid and solid materials, *e.g.* an organic feed stream comprising biomass. In this case, an evaporator should be used that is suitable for processing a feed stream comprising solid materials. Therefore, the use of a cyclone evaporator is preferred in the method of the present invention. A cyclone evaporator is a cylindrical or conically shaped evaporator wherein a high speed rotating flow is established. When a feed comprising liquid and solid material is introduced in a cyclone evaporator, the mixture is separated because of rotational effects and gravity. An example of such an evaporator is a multi cyclone, as described in Dutch patent application number 1036652, filed in the name of Convex BV, Dearsum (NL) on 2 March 2009 (see also EP 2 403 619).

Upon introduction in the cyclone evaporator, both solid and liquid materials flow in a spiral pattern, beginning at the top of the cyclone and ending at the bottom. The centrifugal forces working on the feed stream and the sudden drop of pressure inside the evaporator provide for a maximum liquid surface area from which evaporation can occur, thereby maximizing the evaporation speed and decreasing the energy consumption. It was found that the multi cyclone evaporator works particularly well in combination with the MVR process for processing feeds of ammonia and acid. The relative small diameter of the multi cyclone results in high G-forces, facilitating the evaporation of ammonia.

At least part of the ammonium solution obtained after condensation of the compressed vapor is contacted with an acid. An example of such an acid is hydrogen sulfide (H₂S), which has a p*K*ₐ of 7.00 (measured at a temperature of 298 K in water). Other acids, in particular stronger acids, may be used, for example hydrogen chloride, nitric acid or sulfuric acid. A preferred way in which the at least part of said ammonium solution may be contacted with an acid is by a stripping or scrubbing process. In a stripping process, ammonium is stripped from the ammonium solution by passing an acid containing gas through said solution. For example, a gas comprising H₂S, such as a gas obtained in methanogenesis, may be used as a stripping gas, producing an ammonium sulfide [(NH₄)₂S] solution. Such a stripping process may be conducted in *e.g.* a spray tower, a trayed tower or a packed column.

Preferably, the method according to the present invention is used for the formation of ammonium salts that can be used as artificial fertilizers. Some ammonium salts are used in agriculture as artificial fertilizers with a high source of elemental nitrogen. Examples of these ammonium salts are ammonium nitrate (NH₄NO₃), ammonium sulfate [(NH₄)₂SO₄], ammonium sulfite [(NH₄)₂SO₃] and ammonium phosphate [(NH₄)₂PO₄].

By choosing a suitable acid in the method of the invention, an ammonium salt solution may be obtained that is suitable as an artificial fertilizer. Preferably, sulfuric acid (H₂SO₄) or nitric acid (HNO₃) may be added to the ammonium solution obtained by the method according to the invention, thus obtaining artificial fertilizers, *viz.* an ammonium sulfate [(NH₄)₂SO₄] solution and an ammonium nitrate NH₄NO₃ solution, respectively. Formed fertilizers can subsequently be concentrated up to a normally known trade quality.

One way of obtaining an ammonium sulfate or ammonium sulfite solution is by first adding sodium hydroxide (NaOH) to the obtained ammonium solution. Subsequently, the ammonium solution comprising sodium hydroxide is brought in contact with oxygen and hydrogen sulfide in *e.g.* a trickling filter, thus oxidizing H₂S into sulfite or sulfate.

The feed stream may already comprise an acid. For example, the feed stream may comprise CO₂, such as a feed stream comprising at least part of a digestate from a methanogenesis reaction. In this case, the ammonium solution obtained after condensation may be an ammonium hydrogen carbonate solution (NH₄HCO₃). An acid may be added to this solution to obtain a more desirable ammonium salt solution.

The part of the feed stream that is not vaporized into the vapor stream, comprising soluble non-volatile materials and solid materials, may be recycled by leading at least part of it back into the feed stream, thus creating a continuous circulating feed stream. In this way, heat in the system is retained and no or minimal ammonia is lost in the process.

Regular MVR systems often have the heat exchanging part integrated in the evaporator. According to the invention, the heat exchangers are separated from the evaporator. This is especially advantageous when the feed stream that is 'freshly added' to the circulating feed stream, *i.e.* feed stream that hasn't passed through the evaporator yet, is very small compared to the total amount of circulating feed stream. In this case, temperature instable compounds will not accumulate at the surface of the heat-exchanger, but will flocculate in the feed stream instead. This results in less fouling and better performance of the heat exchanger. Using separated heat exchangers is even more preferable when the feed stream comprises solid and liquid materials and the evaporator is a multi-cyclone, because in this case high concentrations of solid material may be present at the bottom of the evaporator at one of the lowest temperatures in the system. This makes it an energetically unfavorable place for heat exchanging.

Preferably, the method of the invention comprises a methanogenesis step, which is the final step in the anaerobic digestion of biomass, wherein said feed stream comprises at least part of the digestate formed in said methanogenesis step, which digestate comprises water and ammonia. Using microorganisms for the digestion of biomass is very desirable, because such a process is energetically favorable and environmental friendly.

In methanogenesis, biomass is anaerobically digested by microorganisms in an aqueous environment producing methane (CH₄) and carbon dioxide (CO₂). Furthermore, nitrogen containing organic compounds and sulfur containing organic compounds are reduced to ammonium hydroxide, *i.e.* ammonia dissolved in water, and hydrogen sulfide (H₂S), respectively. CO₂ will mainly dissolve in water and/or react with water to form hydrogen carbonate (HCO_{3⁻}). The pH during methanogenesis will typically rise from a pH of about 4.5-6.5 to a pH higher than 7, preferably about 8, which rise in pH is caused by the decomposition of fatty acids during the methanogenesis step. As a result of this increase in pH, H₂S becomes less soluble in water. Thus, a gas mixture is formed during methanogenesis comprising at least part of said CH₄ and H₂S, which gas is referred to as a biogas. After removal of the biogas, a residue will remain, which residue comprises water, ammonia and CO₂, as well as microorganisms and solid materials, which residue is referred to as a digestate. This digestate is commonly regarded as waste material of the methanogensis step. However, it was found that this residue is very suitable as a feed stream in the method of the present invention. When the digestate is heated according to the invention, CO₂ will become less soluble and the compressed gas will comprise ammonia, water and CO₂. Upon condensation, a concentrated ammonium hydrogen carbonate solution (NH₄HCO₃) is formed.

In case the method of the present invention comprises the methanogenesis step, the ammonium solution may be used as a scrubbing liquid to remove at least part of the hydrogen sulfide from the biogas formed during said methanogenesis. Biogas obtained from methanogenesis can be used as a fuel. However, when combusted, hydrogen sulfide is oxidized to strongly corrosive sulfur compounds such as sulfur dioxide (SO₂), which combines with water into sulfuric acid (H₂SO₄) or sulfurous acid (H₂SO₃). To avoid damage to equipment fired with biogas, *e.g.* gas engines, hydrogen sulfide has to be removed from biogas before it can be used. A process commonly used for removing hydrogen sulfide from biogas is treating the gas with a scrubbing liquid (see, for example, WO-A-91/19558). This process results in clean methane gas and an aqueous waste water stream containing ammonia and hydrogen sulfide. The ammonium solution obtained after condensation in the method of the present invention is found to be very suitable as a scrubbing liquid and thus may be used to remove H₂S from biogas. This is especially advantageous when the method of the present invention comprises the methanogenesis step, because biogas formed in this method may now be treated with a scrubbing solution that is made from waste materials formed during its production. It was surprisingly found that the molar ratio of ammonia in the compressed vapor to hydrogen sulfide in the obtained biogas is about 2:1. Because the reaction to ammonium consumes ammonia and hydrogen sulfide in this same ratio, the use of the ammonium solution as a scrubbing liquid to treat biogas according to the method of the present invention comprising the methanogenesis step, is even more favorable, because said method leaves no or very little waste materials.

According to the method of the present invention, biogas comprising hydrogen sulfide formed in methanogenesis is preferably oxidized before being brought in contact with the ammonium solution. Thus, ammonium sulfate may be formed. Ammonium sulfate is much more suitable as an artificial fertilizer than ammonium sulfide, which would be formed when contacting the biogas directly with the ammonium solution.

For example, about 5% of air may be added to the biogas comprising hydrogen sulfide. Air comprises oxygen, which causes the hydrogen sulfide to oxidize. Subsequently, the biogas comprising the oxidized hydrogen sulfide is brought in contact with the ammonium solution, thus obtaining an ammonium sulfate [(NH₄)₂SO₄] solution or ammonium sulfite [(NH₄)₂SO₃] solution.

The ammonium salt solution obtained by the present invention may be further treated with a stripping gas to remove any undesirable materials present in the ammonium salt solution.

In a further embodiment, the process of the present invention can be used as an economically interesting alternative for current wastewater treatment to remove ammonia. The main proving technology for ammonia removal is biological (nitrification/denitrification) wastewater treatment, which has an energy consumption of 2.3-2.7 kWh/kg N. The process of the present invention runs with an energy consumption of 1.4-2.1 kWh/kg N at a lower operational cost than current wastewater treatment processes.

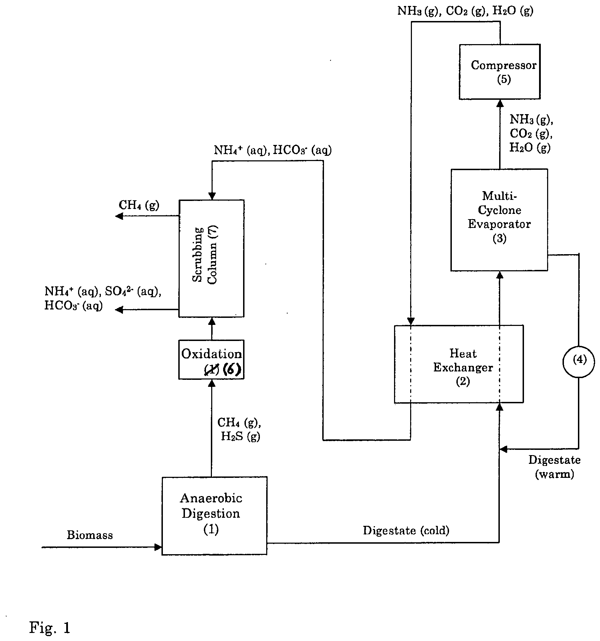

Fig. 1 shows a flow diagram illustrating a method according to one embodiment of this invention. Biomass is anaerobically digested (1). In the methanogenesis step of the anaerobic digestion, the pH rises to pH 8, at which moment a biogas is obtained comprising methane and hydrogen sulfide, leaving a residue comprising water, ammonia, carbon dioxide, microbes and solid materials. Said residue is heated via heat exchangers (2) before being introduced into a multi-cyclone evaporator (3), wherein part of the feed stream is evaporated into a gas vapor comprising water, ammonia and carbon dioxide. The part of the the feed stream that is not evaporated is brought back into the feed stream. The feed stream is circulated through the system by a circulation pump (4). The gas vapor is compressed by compressor (5) and then condensed via heat exchanger (2), thus providing heat to the feed stream and obtaining a concentrated ammonium hydrogen carbonate solution. The hydrogen sulfide in the biogas is oxidized (6) by adding air comprising oxygen. The biogas is then treated in scrubber (7) using the concentrated ammonium hydrogen carbonate solution as a scrubbing solution. Thus, purified biogas and an ammonium sulfate solution are formed, which solution may be further concentrated to obtain an artificial fertilizer.

## Claims

1. Method for the production of an aqueous ammonium salt solution, comprising the steps of:
- feeding a heated feed stream comprising water and ammonia (NH₃) into an evaporator, producing a vapor stream comprising at least part of said NH₃ and at least part of said water, and
- compressing said vapor stream by a compressor into a compressed vapor stream comprising at least part of said NH₃ and at least part of said water, and
- bringing said compressed vapor stream and said feed stream in heat-exchanging contact in a heat exchanger, thereby transferring heat from the compressed vapor to the feed stream and condensing at least part of the compressed vapor stream into an ammonium solution, and
- contacting at least part of said ammonium solution with an acid, thus obtaining an ammonium salt solution.

2. Method according to claim 1, wherein said evaporator is suitable for processing a feed stream comprising solid materials.

3. Method according to claim 2, wherein said evaporator is a cyclone evaporator, *i.e*. a cylindrical or conically shaped evaporator wherein a high speed rotating flow is established.

4. Method according to any of the previous claims, wherein the feed stream further comprises carbon dioxide (CO₂).

5. Method according to claim 4, wherein said ammonium solution is an ammonium bicarbonate (NH₄HCO₃) solution.

6. Method according to any of the previous claims, wherein the feed stream that is not vaporized in the evaporator is at least in part recycled by leading it back into the feed stream.

7. Method according to any one of the previous claims, wherein said heat exchanger is separated from the evaporator.

8. Method according to any of the previous claims, wherein said at least part of said ammonium solution is contacted with said acid by means of a stripping or scrubbing process.

9. Method according to claim 7, wherein said acid is chosen from the group consisting of hydrogen sulfide (H₂S), sulfuric acid (H₂SO₄) or nitric acid (HNO₃).

10. Method according to claims 8 or 9, wherein an ammonium based fertilizer is obtained.

11. Method according to any of the previous claims, comprising a methanogenesis step, wherein said feed stream comprises at least part of the digestate formed in said methanogenesis step, which digestate comprises water and ammonia.

12. Method according to claim 11, wherein biomass is digested in said methanogenesis step, thus producing a gas mixture and said digestate, wherein said gas mixture comprises methane (CH₄) and hydrogen sulfide (H₂S), and wherein said gas mixture is removed from said digestate at a pH higher than 7.

13. Method according to claim 12, comprising an additional step wherein at least part of said H₂S is removed from said gas mixture by scrubbing said gas mixture with said ammonium solution.

14. Process according to claim 12 or 13, wherein at least part of said H₂S is oxidated in a biological way to sulfate (SO₄²⁻).

## Patentansprüche

1. Verfahren zur Herstellung einer wässrigen Ammoniumsalzlösung, umfassend die Schritte von:
- Zuführen eines erhitzten Zustroms, umfassend Wasser und Ammoniak (NH₃) in einen Verdampfer, zur Herstellung eines Dampfstroms, umfassend mindestens einen Teil des NH₃ und mindestens einen Teil des Wassers, und
- Komprimieren des Dampfstroms durch einen Kompressor in einen komprimierten Dampfstrom, umfassend mindestens einen Teil des NH₃ und mindestens einen Teil des Wassers, und
- Inkontaktbringen des komprimierten Dampfstroms und des Zustroms zum Wärmeaustausch in einem Wärmetauscher, um dadurch Wärme von dem komprimierten Dampf auf den Zustrom zu übertragen und mindestens einen Teil des komprimierten Dampfstroms in eine Ammoniumlösung zu kondensieren, und
- Kontaktieren von mindestens einem Teil der Ammoniumlösung mit einer Säure, um damit eine Ammoniumsalzlösung zu erhalten.

2. Verfahren nach Anspruch 1, wobei der Verdampfer zur Verarbeitung eines Zustroms, umfassend Feststoffe, geeignet ist.

3. Verfahren nach Anspruch 2, wobei der Verdampfer ein Zyklonverdampfer ist, *d. h.* ein zylindrisch oder konisch geformter Verdampfer, in dem ein Hochgeschwindigkeitsrotationsfluss erstellt wird.

4. Verfahren nach einem der vorhergehenden Ansprüche, wobei der Zustrom ferner Kohlendioxid (CO₂) umfasst.

5. Verfahren nach Anspruch 4, wobei die Ammoniumlösung eine Ammoniumbicarbonat (NH₄HCO₃)-Lösung ist.

6. Verfahren nach einem der vorhergehenden Ansprüche, wobei der Zustrom, der nicht in dem Verdampfer verdampft wird, durch Zurückführen in den Zustrom mindestens teilweise wiederverwertet wird.

7. Verfahren nach einem der vorhergehenden Ansprüche, wobei der Wärmetauscher von dem Verdampfer getrennt ist.

8. Verfahren nach einem der vorhergehenden Ansprüche, wobei der mindestens eine Teil der Ammoniumlösung mittels eines Stripping- oder Reinigungsprozesses mit der Säure kontaktiert wird.

9. Verfahren nach Anspruch 7, wobei die Säure ausgewählt ist aus der Gruppe, bestehend aus Schwefelwasserstoff (H₂S), Schwefelsäure (H₂SO₄) oder Salpetersäure (HNO₃).

10. Verfahren nach den Ansprüchen 8 oder 9, wobei ein Dünger auf Ammoniumbasis erhalten wird.

11. Verfahren nach einem der vorhergehenden Ansprüche, umfassend einen Methanogeneseschritt, wobei der Zustrom mindestens einen Teil des in dem Methanogeneseschritt gebildeten Gärrückstands umfasst, wobei der Gärrückstand Wasser und Ammoniak umfasst.

12. Verfahren nach Anspruch 11, wobei Biomasse in dem Methanogeneseschritt aufgeschlossen wird, um damit ein Gasgemisch und den Gärrückstand herzustellen, wobei das Gasgemisch Methan (CH₄) und Schwefelwasserstoff (H₂S) umfasst und wobei das Gasgemisch aus dem Gärrückstand bei einem pH höher als 7 entfernt wird.

13. Verfahren nach Anspruch 12, umfassend einen zusätzlichen Schritt, wobei mindestens ein Teil des H₂S durch Reinigen des Gasgemisches mit der Ammoniumlösung aus dem Gasgemisch entfernt wird.

14. Verfahren nach Anspruch 12 oder 13, wobei mindestens ein Teil des H₂S auf biologische Weise zu Sulfat (SO₄²⁻) oxidiert wird.

## Revendications

1. Procédé pour la production d'une solution aqueuse de sel d'ammonium, comprenant les étapes de :
- introduction d'un courant d'alimentation chauffé comprenant de l'eau et de l'ammoniac (NH₃) dans un évaporateur, production d'un courant de vapeur comprenant au moins une partie dudit NH₃ et au moins une partie de ladite eau, et
- compression dudit courant de vapeur par un compresseur en un courant de vapeur comprimée comprenant au moins une partie dudit NH₃ et au moins une partie de ladite eau, et
- mise en contact dudit courant de vapeur comprimée et dudit courant d'alimentation par échange de chaleur dans un échangeur de chaleur, transférant par-là la chaleur de la vapeur comprimée au courant d'alimentation et condensant au moins une partie du courant de vapeur comprimée dans une solution d'ammonium, et
- mise en contact d'au moins une partie de ladite solution d'ammonium avec un acide, obtenant ainsi une solution de sel d'ammonium.

2. Procédé selon la revendication 1, dans lequel ledit évaporateur est approprié pour traiter un courant d'alimentation comprenant des matériaux solides.

3. Procédé selon la revendication 2, dans lequel ledit évaporateur est un évaporateur cyclone, c'est-à-dire un évaporateur de forme cylindrique ou conique dans lequel est établi un écoulement rotatif à vitesse élevée.

4. Procédé selon l'une quelconque des revendications précédentes, dans lequel le courant d'alimentation comprend de plus du dioxyde de carbone (CO₂).

5. Procédé selon la revendication 4, dans lequel ladite solution d'ammonium est une solution de bicarbonate d'ammonium (NH₄HCO₃).

6. Procédé selon l'une quelconque des revendications précédentes, dans lequel le courant d'alimentation qui n'est pas vaporisé dans l'évaporateur est au moins en partie recyclé en le renvoyant dans le courant d'alimentation.

7. Procédé selon l'une quelconque des revendications précédentes, dans lequel ledit échangeur de chaleur est séparé de l'évaporateur.

8. Procédé selon l'une quelconque des revendications précédentes, dans lequel ladite au moins une partie de ladite solution d'ammonium est mise en contact avec ledit acide au moyen d'un procédé d'épuration ou de lavage.

9. Procédé selon la revendication 7, dans lequel ledit acide est choisi dans le groupe constitué de sulfure d'hydrogène (H₂S), d'acide sulfurique (H₂SO₄) ou d'acide nitrique (HNO₃).

10. Procédé selon la revendication 8 ou 9, dans lequel un engrais à base d'ammonium est obtenu.

11. Procédé selon l'une quelconque des revendications précédentes, comprenant une étape de méthanogénèse, dans lequel ledit courant d'alimentation comprend au moins une partie du digestat formé dans ladite étape de méthanogénèse, lequel digestat comprend de l'eau et de l'ammoniac.

12. Procédé selon la revendication 11, dans lequel de la biomasse est digérée dans ladite étape de méthanogénèse, produisant ainsi un mélange de gaz et ledit digestat, dans lequel ledit mélange de gaz comprend du méthane (CH₄) et du sulfure d'hydrogène (H₂S), et dans lequel ledit mélange de gaz est retiré dudit digestat à un pH supérieur à 7.

13. Procédé selon la revendication 12, comprenant une étape supplémentaire dans laquelle au moins une partie dudit H₂S est retirée dudit mélange de gaz par lavage dudit mélange de gaz avec ladite solution d'ammonium.

14. Procédé selon la revendication 12 ou 13, dans lequel au moins une partie dudit H₂S est oxydée par voie biologique en sulfate (SO₄²⁻).
